(19) Europäisches Patentamt
European Patent Office
Office européen des brevets

(11) **EP 3 584 275 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(51) Int Cl.:
***C08J 5/18*** *(2006.01)*     ***C08J 7/04*** *(2020.01)*

(21) Anmeldenummer: **19179987.3**

(22) Anmeldetag: **13.06.2019**

(54) **TRANSPARENTE, THERMOFORMBARE, BIAXIAL ORIENTIERTE POLYESTERFOLIE, VERFAHREN ZU IHRER HERSTELLUNG UND IHRE VERWENDUNG**

TRANSPARENT THERMOFORMABLE BIAXIALLY ORIENTED POLYESTER FILM, METHOD FOR THE PREPARATION THEREOF AND UTILISATION THEREOF

FEUILLE DE POLYESTER TRANSPARENTE, THERMOFORMABLE, ORIENTÉE DE MANIÈRE BIAXIALE, SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2018 DE 102018210044**
        **07.12.2018 DE 102018221226**

(43) Veröffentlichungstag der Anmeldung:
**25.12.2019 Patentblatt 2019/52**

(73) Patentinhaber: **Mitsubishi Polyester Film GmbH**
**65203 Wiesbaden (DE)**

(72) Erfinder:
• **Peiffer, Herbert**
**55126 Mainz (DE)**
• **Jesberger, Martin**
**55128 Mainz (DE)**
• **Bartsch, Stefan**
**55294 Bodenheim (DE)**
• **Kuhmann, Bodo**
**65594 Runkel (DE)**
• **Fischer, Viktor**
**68723 Oftersheim (DE)**
• **Konrad, Matthias**
**65830 Kriftel (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
EP-A1- 2 810 776      DE-A1- 10 247 894
DE-A1-102011 087 740    US-A- 5 897 959

EP 3 584 275 B1

**Beschreibung**

Die Erfindung betrifft eine hochtransparente, thermoformbare und biaxial orientierte Polyesterfolie mit einer Basisschicht und optional auf dieser Basisschicht aufgebrachten Deckschichten. Die thermoformbare, biaxial orientierte Polyesterfolie enthält Polyester auf Basis von aromatischen Säuren und aliphatischen Diolen. Die Folie zeichnet sich durch eine gute Thermoformbarkeit, gute optische Eigenschaften, einer erhöhten mechanischen Stabilität und einer guten Kratzfestigkeit aus. Die Erfindung betrifft weiterhin ein Verfahren zur Herstellung der Folie und ihre Verwendung.

Thermoformbare oder warmformbare Folien sind hinlänglich bekannt und gelangen in eine Vielzahl von verschiedenen Anwendungen. Die Folien zeichnen sich sämtlich durch eine gute Formbarkeit (Verstreckung) in der Wärme, bei der Vakuum- oder Druckluftumformung oder der mechanischen Einwirkung mittels Stempel aus. Typische Folienmaterialien für die Thermoformung sind PVC, PET, PS, PP, vor allem aber PC. Auch mehrschichtige Foliensysteme (PS/EVOH/PE oder PP/EVOH/PE), z.B. mit besseren Heißsiegeleigenschaften oder Dampfsperren für eine bessere Haltbarkeit von Lebensmitteln finden oft Anwendung. Typische Anwendungsgebiete für thermogeformte Folien sind die Inmold-Dekoration/das Inmold-Labeling (IMD/IML), die Verpackung von Lebensmittel, z.B. Fleisch oder Geflügel, Blister, Hartschalenkoffer, Möbel oder die Metallaminierung (can liner). Die verfahrenstechnische Prozessabläufe bei der Formgebung der Folie sind bei den genannten Anwendungen ähnlich, daher sollen an dieser Stelle zwei typische Anwendungen kurz beschrieben werden.

Bei der Inmold-Dekoration/dem Inmold-Labeling (z.B. Fa. Foliotec) wird die Folie zunächst auf jeweilige Umformungstemperatur gebracht, die deutlich größer als die Glastemperatur des zu formenden Polymers sein muss. Die geschieht z.B. mittels IR-Strahlern oder mittels Kontakterwärmung. Die Unterseite der vorerwärmten Folie/des vorerwärmten Halbzeugs wird evakuiert (Standard: ca. 50 mbar). Durch die entstehende Druckdifferenz wird die Folie/das Halbzeug vom atmosphärischen Druck der Oberseite in die Hohlform (Negativformgebung) auf der Vakuumseite hineingezogen. Anschließend wird die verformte Folie gekühlt und auf Umgebungstemperatur gebracht. Fehler auf dem Produkt, wie beispielsweise Abschreckspuren beim Kühlvorgang, werden durch eine entsprechende Temperierung der Form vermieden. Um das Dekor zu schützen, wird in der Regel ohne Oberstempel gearbeitet.

Eine Variante stellt das High-Pressure-Forming Verfahren (HPF) dar, das von den Firmen Bayer und Niebling entwickelt und patentiert wurde (z.B. US 5 217 563A). Es wird hauptsächlich angewendet, wenn Oberflächendekore mit Symboliken verwendet werden, die am späteren Spritzgussteil passgenau sitzen sollen. Typische Produkte, die durch dieses Verfahren hergestellt werden, sind Radioblenden für Personenkraftfahrzeuge. Bei diesen ist darauf zu achten, dass die Symbolanzeige für die einzelnen Funktionstasten passgenau an der richtigen Position sitzt. Das Gleiche gilt auch für Tachoblenden.

Bei diesem Verfahren bringen ca. 300 bar Luft die Folie berührungslos in die Form. Außerdem kann bei Anwendung dieser Technologie die Folie unterhalb der Erweichungstemperatur des verwendeten Polymers verformt werden. Dies bringt Vorteile mit sich - die Symbolik bleibt passgenau erhalten und die Verformung geht ohne Markierungen auf der Folie von statten. Des Weiteren ändert sich aufgrund der niedrigen thermischen Belastung des Polymers der Glanzgrad der Folien nicht. Die Zykluszeiten sind relativ kurz, was wiederum geringe Produktionskosten nach sich zieht.

Typische Beispiele aus der Verpackungsanwendung sind transparente Menüschalen, die z.B. aus a-PET, modifiziertem boPET oder aus PA/PET-Laminaten unter Anwendung von Vakuum oder Druckluft hergestellt werden. Nach Befüllung mittels Lebensmittel wird die Menüschale mit einer auf den Rand der Menüschale heiß aufgesiegelten Folie fest verschlossen. Solche Packungen finden ihren Einsatz insbesondere bei Fleisch, Fisch, Geflügel und trockenen Fertig-Produkten wie Sandwiches, Burger oder Wraps. Das Zubereiten der Produkte in solchen Packungen wird als sauber und hygienisch angesehen und erfreut sich deshalb einer großen Beliebtheit.

Eine besonders wirtschaftliche Methode, saubere und hygienische Packungen für die Verarbeitung von frischem Fleisch, Fisch oder Geflügel herzustellen, besteht in der Anwendung von Vakuumverfahren mittels Multivac-Maschinen.

Vom Markt werden hohe optische Anforderungen an die Folien für das Thermoformen gestellt, insbesondere an die Trübung, an die Clarity und an den Glanz der Folien. Damit der Packungsinhalt oder das hinter der thermogeformten Folie (z.B. Blende) liegende Spritzgussteil (z.B. Radioteil) gut erkennbar sind, sollte die Trübung der Folie (vor und nach der Thermoformung) < 2 % und die Clarity der Packung > 85 % sein. Außerdem soll die Folie den Betrachter optisch ansprechen. Dazu werden hohe Glanzwerte der Folie angestrebt.

Daneben wird von dem thermogeformten Produkt eine hohe Durchstoßfestigkeit als auch eine gute Kratzfestigkeit gefordert, damit es den Transport ohne Beschädigungen überstehen kann und die Funktionsfähigkeit des Produktes während des Lebenszyklus erhalten bleibt.

**Stand der Technik**

Folien für die Thermoformanwendung sind bekannt.

In der EP 2810776 A1 werden antimonfreie, thermoformbare und temperaturbeständige, biaxial orientierte Polyesterfolien für die Metalllaminierung, sowie für die Verpackung von Lebensmitteln beschrieben, z.B., um diese in einem Ofen zu garen, ohne dass das Lebensmittel zuvor aus der Verpackung genommen werden muss (cook-in). Nach der EP 2810776 sind hierfür Polyesterfolien geeignet, die aus antimonfreien Polyestern hergestellt sind und Radikalfänger enthalten. Die biaxial orientierte Polyesterfolien weisen mindestens eine Schicht auf, die zu weniger als 95 Mol% aus einem Homopolyester besteht und in dieser Schicht mindestens 300 ppm eines Radikalfängers enthalten, zur Herstellung eines Deckels, Folienbeutels oder -schlauches oder als Metalllaminierfolie.

Die so hergestellten Folien eignen sich zur Herstellung tiefziehfähiger Folienbeutel mit geringem Tiefziehverhältnis. Die beschriebenen Folien sind verbesserungswürdig in der Thermoformbarkeit, der Durchstoßfestigkeit, vor allem aber verbesserungswürdig in den optischen Eigenschaften, wie Trübung und Clarity.

In der EP 1 697 129 B1 wird ein thermoformbares Folienlaminat beschrieben, das eine thermoformbare Folienschicht (a), eine Strukturfolienschicht (b), eine heißsiegelfähige Schicht (c) und gegebenenfalls eine Barriereschicht (d) umfasst. An der ersten Oberfläche der thermoformbaren Folienschicht (a) grenzt die Strukturfolienschicht (b) an und an der gegenüberliegenden, zur Packungsinnenseite gerichteten, zweiten Oberfläche, befindet sich die heißsiegelfähige Schicht (c). Die thermoformbare Folienschicht (a) weist eine Polymerzusammensetzung auf, die zumindest 80 Gew.-% Polyethylenterephthalat umfasst. Das Laminat ist für die eingangs genannte Anwendung geeignet, es ist aber verbesserungswürdig in der Thermoformbarkeit, der Durchstoßfestigkeit, vor allem aber verbesserungswürdig in den optischen Eigenschaften, wie Trübung und Clarity.

In der EP 1 945 512 B1 wird ein Verfahren zum Verpacken von Fisch oder Fleisch beschrieben, das die folgenden Schritte umfasst (i) Bereitstellen eines thermoformbaren polymeren Aufnahmefilms (= Unterfolie) und eines polymeren Abdeckfilms (= Oberfolie). Der Aufnahmefilm besteht aus einem Einzelschicht-Polyester- oder Polyamidsubstrat und der Abdeckfilm ist vorzugsweise aus Polyesterpolymeren aufgebaut. Zumindest eine der beiden Oberflächen des Aufnahme- und des Abdeckfilms hat eine heißsiegelfähige Oberfläche. (ii) Bereitstellen eines erhöhten äußeren Teils und eines vertieften mittleren Teils in dem Aufnahmefilm durch Thermoformen. (iii) Anordnen einer Portion Fleisch oder Fisch auf der inneren (= ersten) Oberfläche des Aufnahmefilms. (iv) Anordnen des Abdeckfilms über der Portion Fleisch oder Fisch, so dass die innere (= erste) Oberfläche des Abdeckfilms der inneren Oberfläche des Aufnahmefilms zugewandt ist. (v) In Kontaktbringen der Randabschnitte der ersten Oberfläche des Aufnahmefilms und der ersten Oberfläche des Abdeckfilms und Bilden einer Heißsiegelverbindung dazwischen und (vi) gegebenenfalls Einfrieren des verpackten Fleischs oder Fischs. Das Verfahren ist für die eingangs genannte Anwendung geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Trübung und Clarity).

Ein weiteres Beispiel dafür bildet die EP 0 415 383, die die Nutzung einer Polyesterfolie mit einem Schmelzpunkt von 210 bis 245°C, einer planaren Orientierung von 0,10 bis 0,16, einem Schrumpf von kleiner/gleich 10 % und einer Dichte von weniger als 1,385 g/cm$^3$ beschreibt. Die Folie zeichnet sich durch eine gute Verformbarkeit und eine gute Haftung auf Metall aus und soll z.B. in der Dosenlaminierung eingesetzt werden. Das Verfahren ist für die eingangs genannte Anwendung geeignet; die in der EP 0 415 383 näher beschriebenen Folien sind aber verbesserungswürdig in der Optik (Trübung, Glanz und Clarity).

**Aufgabenstellung**

Aufgabe der vorliegenden Erfindung war es, eine Folie für die eingangs genannten Anwendungen zur Verfügung zu stellen, die sich insbesondere durch eine gute Thermoformbarkeit (= Tiefziehfähigkeit) auszeichnet. Darüber hinaus soll die Folie eine besonders brillante Optik - insbesondere eine hohe Clarity - zeigen, durchstoßfest sein und gegenüber thermoformbare Folien aus PC erhöhte Kratzfestigkeiten aufweisen. Sie soll die Nachteile von Folien nach dem Stand der Technik nicht mehr aufweisen und sich insbesondere durch die folgenden Punkte/Eigenschaften auszeichnen

- Die Folie soll eine so gute Thermoformbarkeit aufweisen, dass hiermit am Markt übliche Produkte (Fleisch-, Geflügel oder Fischstücke), problemlos im gewünschten Verpackungs-Design eingepackt werden können. Entsprechend den Marktanforderungen soll die Folie mindestens bis zu einer Tiefe von 70 mm thermogeformt werden können.
- Daneben soll die Folie sehr gute mechanische Eigenschaften aufweisen. Die für die vorliegenden Anwendungen besonders wichtige mechanische Eigenschaft der Folie ist die Durchstoßfestigkeit. Sie soll derart hoch sein, dass das fertige Produkt, ohne Schaden zu nehmen, transportiert und gelagert werden kann.
- Die Folie soll sich durch eine brillante Optik auszeichnen. Dies betrifft die Trübung und den Glanz, insbesondere aber die Clarity der erfindungsgemäßen Folie. Von der Folie wird gewünscht, dass ihre Trübung kleiner als 2 %, ihre Clarity größer als 85 % und ihr Glanz größer als 120 ist (alle optischen Werte werden direkt nach der Herstellung der Folie gemessen).
- Daneben soll die Folie gute Barriereeigenschaften aufweisen, insbesondere gegen Sauerstoff, Wasserdampf und verschiedene Aromen
- Daneben soll die Packung gute Barriereeigenschaften aufweisen, insbesondere gegen Sauerstoff und Wasserdampf. Als Vergleichsmaßstab dienen die Permeationswerte von üblichen, nach dem Stand der Technik hergestellten, biaxial orientierten PET-Folien (siehe z.B. http://www.bfr.bund.de/cm/343/barrierewirkung-ausgewaehlterkunststoffmaterialien-gegen-die-migration-von-mineraloelfraktionen-in-lebensmittel.pdf), die nicht/bzw. nur marginal ( < 5 %) überschritten werden dürfen. Die Permeationswerte von 100 $\mu$m dicken PET-Folien betragen: OTR = 15 cm$^3$/(m$^2$ d bar) und die WVTR = 2 g/(m$^2$ d).

• Die hochtransparente und daher nur wenig gefüllte Folie (Konzentration Antiblockmittel, siehe weiter hinten) soll sich gut wickeln und gut verarbeiten lassen. Beim Auf- und Abwickeln der Folie dürfen einzelne Folienlagen nicht aneinander haften, auch nicht bei erhöhter Temperatur, z.B. 50 oder 60 °C. Eine erhöhte Haftung zwischen einzelnen Folienlagen würde die Abwicklung der Folie erschweren oder gar unmöglich machen.

• Die Folie soll sich wirtschaftlich herstellen lassen. Dies bedeutet beispielsweise, dass zur Herstellung Folie in der Industrie übliche Verfahren eingesetzt werden können.

**Lösung der Aufgabe**

Gelöst wird die Aufgabe durch die Bereitstellung einer transparenten, biaxial orientierten, thermoformbaren Polyesterfolie, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Folie

a) einen Flächen-E-Modul im Bereich von 4500 bis 6400 N/mm$^2$

b) eine Summe der Festigkeiten ($\sigma_5$-Wert) in Längsrichtung und in Querrichtung im Bereich von 170 bis 220 MPa

c) eine Dichte von kleiner 1390 kg/m$^3$

d) eine Trübung von weniger als 2,0 %, eine Clarity von mindestens 85 % und einen Glanz von mindestens 120

e) eine Dicke im Bereich von 50 bis 300 $\mu$m

aufweist.

Im Vorstehenden wie im Folgenden bezieht sich Gew.-%, sofern nichts anderes erwähnt, immer auf die Masse der jeweiligen Schicht oder das jeweilige System, in dessen Zusammenhang die Angabe genannt ist.

Die Folie nach der vorliegenden Erfindung umfasst eine thermoformbare, transparente, biaxial orientierte, einschichtige Polyesterfolie (A) oder eine transparente, biaxial orientierte, mehrschichtige koextrudierte Polyesterfolie, z.B. (A' A'' A''').

Die biaxial orientierte Polyesterfolie umfasst zu mindestens 85 Gew.-% einen thermoplastischen Copolyester. Erfindungsgemäß handelt es sich um einen Copolyester, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind. Bevorzugt handelt es sich um einen Copolyester, dessen Dicarbonsäure-Komponenten zu 86 bis 93 Mol-% auf Terephthalsäure abgeleitete Einheiten und zu 7 bis 14 Mol-% auf Isophthalsäure abgeleitete Einheiten zurückzuführen sind. Als Diol im thermoplastischen Copolyester ist erfindungsgemäß bevorzugt Ethylenglykol geeignet.

0 bis 15 Gew.-% der Folie können aus weiteren Polymeren/Polymeranteile und/oder weiteren Substanzen aufgebaut sein, wobei die weiteren Polymere/Polymeranteile aus anderen aromatischen und/oder aliphatischen Dicarbonsäuren bzw. Diolen stammen. In vorteilhafter Weise können für den thermoplastischen Polyester der erfindungsgemäßen Folie auch Mischungen oder Blends aus den genannten Homo- und/oder Copolymeren verwendet werden.

Geeignete andere aromatische Dicarbonsäuren sind bevorzugt Terephthalsäure, 2,5-Furandicarbonsäure (FDCA), Biphenyl-4,4'-dicarbonsäure, Naphthalindicarbonsäuren (beispielsweise Naphthalin-1,4- oder 1,6-dicarbonsäure oder Naphthalin-2,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenyl-acetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C$_3$-C$_{19}$) Alkandisäuren besonders geeignet, wobei der Alkanteil geradkettig oder verzweigt sein kann.

Geeignete andere aliphatische Diole sind beispielsweise Ethylenglykol, Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C$_6$H$_4$-X-C$_6$H$_4$-OH, wobei X für -CH$_2$-, -C(CH$_3$)$_2$-, -C(CF$_3$)$_2$-, -O-, -S- oder -SO$_2$- steht.

Durch die Wahl der erfindungsgemäßen Anteile im Copolyester, die auf Terephthalsäure und Isophthalsäure abgeleitete Einheiten zurückzuführen sind, werden die gewünschten guten mechanischen Eigenschaften, insbesondere aber die gewünschte gute Thermoformbarkeit der biaxial orientierten Polyesterfolie erhalten. Beträgt der Anteil der Dicarbonsäure-Komponenten, die auf von Isophthalsäure abgeleitete Einheiten zurückzuführen sind, weniger als 6 Mol-%, so kann die gewünschte gute Thermoformbarkeit der Folie nicht erhalten werden. Beträgt andererseits dieser Anteil mehr 15 Mol-%, so ist eine verfahrenssichere Herstellung der erfindungsgemäßen Folie nach dem nachstehend beschriebenen Verfahren nicht mehr gegeben. Folien, die aus solch hohen Anteilen an Komponenten, die auf Isophthalsäure abgeleitete Einheiten zurückzuführen sind, bestehen, neigen im Herstellungsprozess z.B. sehr stark zum Verkleben mit sich selbst oder mit entsprechenden Maschinenteilen, z.B. Walzen in der Längsstreckung oder Walzen im Auslauf der Maschine nach der Querstreckung.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden in Gegenwart allgemein üblicher Polykondensationskatalysatoren, wie Antimontrioxid, Titanoxid, sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist dann antimonfrei. Unter antimonfrei versteht man im Sinne der Erfindung einen Antimon-Gehalt von ≤ 20 ppm (ein Antimon-Gehalt von ≤ 20 ppm kann im Polyesterrohstoff akzeptiert werden, da antimonfreie Rohstoffe zumeist in Reaktoren synthetisiert werden in denen Antimonhaltige/Antimontrioxid-katalysierte Rohstoffe hergestellt werden. Somit können ubiquitäre Antimonspuren nicht immer vollständig ausgeschlossen werden). Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

Die Folie gemäß der vorliegenden Erfindung ist charakterisiert durch einen Flächen-E-Modul im Bereich von 4500 bis 6400 N/mm$^2$, gemäß untenstehender Formel

$$E_{Fläche} = \sqrt{(E_{MD}{}^2 + E_{TD}{}^2)}.$$

$E_{MD}$ ist der E-Modul der Folie, gemessen in Längsrichtung der Maschine und $E_{TD}$ ist der E-Modul der Folie, gemessen in Querrichtung der Maschine. Diese Eigenschaft wird im Wesentlichen durch Einhaltung des unten beschriebenen erfindungsgemäßen Herstellprozesses in Verbindung mit den oben beschriebenen erfindungsgemäßen Polyestern erreicht. Es wurde überraschender Weise gefunden, das für den Fall, dass der Flächenmodul kleiner ist als 4500 N/mm$^2$, die Folie nicht mehr die gewünschten mechanischen Eigenschaften aufweist und ist daher für die genannte Anwendung ungeeignet. Beispielsweise kann dann die Folie aufgrund des zu geringen Flächen-E-Modul nicht mehr vernünftig gewickelt werden; es entstehen Falten, die unerwünscht sind. Weiterhin wurde im Rahmen der vorliegenden Erfindung gefunden, dass auf der anderen Seite für den Fall, wo der Flächenmodul größer ist als 6400 N/mm$^2$, die Folie nicht mehr entsprechend der Aufgabenstellung tiefgezogen werden kann.

Weiterhin ist die Folie gemäß der vorliegenden Erfindung durch die Summe der Festigkeiten ($\sigma_5$-Wert) in Längsrichtung (MD) und in Querrichtung (TD) im Bereich von 170 bis 220 MPa gekennzeichnet. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Summe der Festigkeiten kleiner als 170 MPa, so hat die Folie nicht mehr die gewünschten mechanischen Eigenschaften und ist daher für die Anwendung ungeeignet. Beispielsweise kann dann die Folie aufgrund der zu geringen Summe der Festigkeiten nicht mehr vernünftig in der Thermoformmaschine transportiert werden; die Folie verzieht sich, was unerwünscht ist. Im anderen Fall, wo der Summe der Festigkeiten größer ist als 220 MPa, kann die Folie nicht mehr entsprechend der Aufgabenstellung tiefgezogen werden.

Weiterhin ist die Folie gemäß der vorliegenden Erfindung durch eine Dichte von kleiner 1390 kg/m$^3$ charakterisiert. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Dichte der Folie größer als 1390 kg/m$^3$, so ist die Folie überraschender Weise zu kristallin, um entsprechend der Aufgabenstellung tiefgezogen werden zu können.

Zur Erzielung der gewünschten guten mechanischen Eigenschaften, insbesondere aber zur Erzielung der gewünschten guten Thermoformbarkeit der Folie ist es erforderlich, dass der SV-Wert der Folie in einem bestimmten Bereich liegt. Erfindungsgemäß liegt der SV-Wert der Folie im Bereich von 680 bis 1000, bevorzugt im Bereich von 710 bis 950, insbesondere bevorzugt im Bereich von 740 bis 900. Dabei gilt, dass sich die SV-Werte der jeweiligen Polymerschmelzen (Basis- und Deckschichten) um nicht mehr als 100, vorzugsweise nicht mehr als 75, insbesondere aber nicht mehr als 50 Einheiten unterscheiden sollten.

Ist der SV-Wert der Folie kleiner als 680, so kann die geforderte gute Thermoformbarkeit der Folie von ca. 70 mm Tiefzug nicht erreicht werden. Ist andererseits der SV-Wert größer als 1000, so ist der Polyester zu viskos und kann z.B. nicht mehr wirtschaftlich extrudiert werden.

a) Um das Verarbeitungsverhalten der Folie weiterhin zu verbessern, ist es von Vorteil, in die Folie Partikel einzuarbeiten. Dabei hat es sich als günstig erwiesen, die folgenden Bedingungen einzuhalten und weiterhin zu verbessern. Die Partikel sollen einen mittleren Partikeldurchmesser $d_{50}$ von 1,5 bis 5,0 $\mu$m aufweisen. Als besonders zweckmäßig hat es sich erwiesen, Teilchen mit einem $d_{50}$ von 1,7 bis 4,5 $\mu$m und besonders bevorzugt von 2,0 bis 4,0 $\mu$m zu verwenden.

b) Die Partikel sollen in der Folie in einer Konzentration von 0 bis 0,1 Gew.-% (1000 ppm) vorhanden sein. Bevorzugt beträgt die Konzentration der Partikel in der Folie $1,0\times10^{-5}$ bis 0,075 Gew.-% und besonders bevorzugt $1,1\times10^{-5}$ bis 0,05 Gew.-%.

Bei der Verwendung von Teilchen mit einem Durchmesser $d_{50}$, der unterhalb von 1,5 $\mu$m liegt, ist ein positiver Einfluss der Partikel z.B. auf die Wicklung der Folie nicht gegeben. In diesem Fall neigt die Folie z.B. beim Abwickeln zum Ein- oder Weiterreißen, was unerwünscht ist. Teilchen mit einem Durchmesser $d_{50}$ von größer als 5,0 $\mu$m verursachen in der Regel Probleme bei der Verstreckung der Folie, es bilden sich zunehmend Vakuolen, die die Trübung der Folie negativ beeinflussen. Enthält die Folie Partikel in einer Konzentration von mehr als 0,1 Gew.-%, so liegt die Trübung der Folie nicht mehr im erfindungsgemäßen Bereich.

Übliche Antiblockmittel sind anorganische und/oder organische Partikel, wie beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Calcium-, Barium-, Zink- oder Mangan-Salze der in der Folie eingesetzten abgeleiteten Dicarbonsäuren, Titandioxid, Kaolin oder vernetzte Polystyrol- oder vernetzte Polymer-Partikel auf Basis von Acrylsäurederivaten.

Erfindungsgemäß bevorzugte Partikel sind synthetisch hergestellte, amorphe $SiO_2$- Partikel in kolloidaler Form. Die Partikel werden hervorragend in die Polymermatrix eingebunden und erzeugen nur wenige Vakuolen.

In den Anwendungen für thermogeformte Folien, wie z.B. Inmold-DekorationIInmold-Labeling, Möbelherstellung, Blister oder Metalllaminierung (can liner) wird die Folie vergleichsweise kurz einer hohen Temperaturbelastung unterworfen. Die Temperaturbelastung beschränkt sich im Wesentlichen auf den Formgebungsprozess, der im Sekundenbereich liegt, wobei Formtemperaturen bis zu 220 °C durchaus möglich sind. Für diesen Fall ist die Stabilität der Folie mit der erfindungsgemäßen Rezeptur ausreichend - es werden keine weiteren Additive benötigt.

Anders ist es z.B. bei der Verpackung von Lebensmittel, bei denen, je nach Anwendung, ein deutlich verbessertes Verhalten der Folie in der Wärme benötigt wird (z.B. beim sogenannten Cook-In-Verfahren (siehe hierzu die EP 1 697 129 oder die EP 2810776 A1)).

Prozessbedingt wird dabei die thermoformbare Folie über einen Großteil ihrer Fläche wenig thermisch belastet. Nur im Randbereich der Packung und hier insbesondere an den Ecken der Packung (Siegelrand) findet eine deutlich erhöhte thermische Belastung der Folie statt. Während der übrige Teil der thermogeformten Folie durch das verdunstende Wasser Temperaturen deutlich unterhalb von 160 °C erfährt, wird der Eckenbereich der Packung der Ofentemperatur für die gesamte Garzeit ausgesetzt.

Im Extremfall wird dabei die Folie im Eckebereich über mehr als 2 h bei einer Temperatur von 220 °C thermisch belastet, wobei bei dieser erhöhten Temperatur Sauerstoff in das Polymere eindringen kann.

Als Folge hiervon kann es durchaus vorkommen, dass die Packung und damit die Folie insbesondere in den Ecken anfängt, spröde zu werden und zur Splitterbildung neigt. Dies ist äußerst unerwünscht und muss vermieden werden.

Wird für diesen Anwendungsbereich eine erhöhte Thermostabilität gefordert, enthält die Folie - aus vorzugsweise antimonfreien Polyester - bevorzugt einen oder mehrere Radikalfänger. Dieser/Diese Radikalfänger basiert(en) bevorzugt auf phenolischen Antioxidantien.

Es wurde überraschend gefunden, dass die Folie, die einen oder mehrere Radikalfänger enthält, eine deutlich erhöhte Temperaturresistenz aufweist, so dass daraus hergestellte Verpackungen mehr als eine Stunde in einem Ofen bei Temperaturen von oberhalb 220 °C verbleiben können, ohne dabei zu verspröden.

In einer bevorzugten Ausführungsform enthält die Folie nach der vorliegenden Erfindung 500 -3000 ppm eines Radikalfängers, wobei der Gehalt bevorzugt zwischen 600 - 2500 ppm und insbesondere bevorzugt zwischen 700 - 2000 ppm liegt. Niedrigere Gehalte als 500 ppm führen tendenziell zu einem Versagen im Ofen (= Splitterbildung) und höhere Gehalte als 3000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 3000 ppm führen zudem tendenziell zur Bildung von Gelen und einem nicht gewünschten Gelbstich der Folie.

Als Radikalfänger kann sowohl eine Verbindung oder eine Mischung aus verschiedenen Radikalfängern eingesetzt werden, wobei es bevorzugt ist eine Verbindung als Radikalfänger einzusetzen. Der/die verwendete(n) Radikalfänger werden bevorzugt aus der Gruppe der phenolischen Antioxidantien ausgewählt.

Bevorzugte Radikalfänger sind pentaerythritol tetrakis [3-(3,5-di-tert-butyl-4-hydroxyphenyl)-propionate] (CAS-Nr. 6683-19-8) und 1,3,5-Trimethyl-2,4,6-tris(3,5-di-tert-butyl-4-hydroxybenzyl)-benzol) (CAS-Nr. 1709-70-2), erhältlich unter den Handelsnamen Irganox 1010 und Irganox 1330 der Firma BASF.

Die Wirksamkeit des Radikalfängers kann direkt an der Verpackung, z.B. nach Entnahme der Verpackung aus dem Ofen getestet werden. Die Verpackung wird dabei als gut (= für die Anwendung geeignet) bezeichnet, wenn an keiner Stelle der Folie nach der vorliegenden Erfindung ein splittern festgestellt werden.

Die Folie kann einschichtig oder mehrschichtig (d.h. zu mindestens zweischichtig) aufgebaut sein. Zur Erzielung der vorgenannten Eigenschaften, insbesondere der geforderten guten optischen Eigenschaften der Polyesterfolie, hat sich ein einschichtiger Aufbau der Folie als vorteilhaft herausgestellt. Aber auch ein zwei- oder dreischichtiger Aufbau der Folie aus zwei Schichten A' und A" oder drei Schichten A'A"A' oder A'A"A''' hat sich als geeignet erwiesen. Die Menge an Partikeln in der Basisschicht A" einer z.B. dreischichtigen Folie sollte dabei niedriger eingestellt werden als in den beiden Schichten A' (und A'''), die vorzugsweise vom Aufbau gleichgehalten werden oder aber auch verschieden sein können.

Die Partikelkonzentration in der Schicht (A") sollte dabei so gewählt werden, dass sie sich positiv auf die Trübung und den Glanz der Folie auswirkt. Bei einer dreischichtigen Folie vom genannten Typ wird in der Schicht (A") die Partikelkonzentration zwischen 0 und 0,08 Gew.-%, vorzugsweise zwischen 0 und 0,05 Gew.-% und insbesondere zwischen 0 und 0,02 Gew.-% liegen.

Bei der Wahl der Partikelkonzentration in den Deckschichten (A' und/oder A''') und in der Basisschicht (A") ist darauf zu achten, dass die Partikelkonzentration in der gesamten Folie den erfindungsgemäßen Wert von 0,1 Gew.-% nicht überschreitet.

Die Dicke der beiden Schichten A' (oder A' und A''') kann gleich oder verschieden sein. Ihre Dicken liegen im Allgemeinen zwischen 0,2 und 5 $\mu$m. Die Folie kann darüber hinaus zusätzlich übliche Additive, wie Stabilisatoren (UV oder Hydrolyse) in den vom Hersteller empfohlenen Konzentrationen enthalten. Sie werden zweckmäßig dem Polymer, bzw. der Polymermischung, bereits vor dem Aufschmelzen im Extruder zugesetzt.

Die Gesamtdicke der erfindungsgemäßen Polyesterfolie kann innerhalb bestimmter Grenzen variieren. Sie beträgt 50 bis 300 $\mu$m, bevorzugt 55 bis 300 $\mu$m und besonders bevorzugt 60 bis 300 $\mu$m. Ist die Dicke der Folie geringer als 50 $\mu$m, so sind die Mechanik und die Barriereeigenschaften der thermogeformten Folie nicht ausreichend. Ist die Dicke der Folie dagegen größer als 300 $\mu$m, so verschlechtert sich die Thermoformbarkeit der Folie und außerdem wird die Herstellung der Folie unwirtschaftlich, was beides unerwünscht ist.

Gegenstand der vorliegenden Erfindung ist ebenfalls ein Verfahren zur Herstellung der thermoformbaren Folie. Es umfasst die Herstellung der Folie durch Extrusion oder Koextrusion (z.B. Herstellung der Schichten (A'A"A''')) das biaxiale Strecken der Folie, sowie das Thermofixieren und das Aufwickeln der gestreckten Folie.

Bei dem Koextrusions-Verfahren werden nach der Extrusion der jeweiligen Schmelzen in getrennten Extrudern diese in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Für die Durchmischung der verschiedenen Komponenten hat es sich dabei als vorteilhaft erwiesen, wenn die Extrusion der Polymere für die Folie oder Folie mit den Schichten (A'A"A''') mit einem Zweischneckenextruder mit Entgasungsmöglichkeit(en) durchgeführt wird. Es wird hierdurch eine Folie hergestellt, die optisch einwandfrei ist, z.B. keine Wolkenstruktur oder keine Streifen aufweist.

Die biaxiale Streckung der Folie wird sequentiell durchgeführt. Bei der sequenziellen Streckung wird vorzugsweise erst in Längsrichtung und anschließend in Querrichtung gestreckt. Das Strecken in Längsrichtung lässt sich z.B. mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperaturen, bei der die biaxiale Streckung durchgeführt wird, können in gewissen Bereichen variieren, sie richten sich im Wesentlichen nach den gewünschten Eigenschaften, insbesondere den gewünschten Thermoformeigenschaften der erfindungsgemäßen Folie. Überraschender Weise wurde dabei gefunden, dass zur Erzielung der gewünschten Thermoformbarkeit die Folie geringer versreckt werden muss, als es nach dem Stand der Technik üblich ist.

Zur Erzielung der gewünschten Thermoformbarkeit der Folie wird die Streckung in Längsrichtung unter bestimmten Bedingungen durchgeführt. Die Temperatur der Folie liegt bei der Streckung in einem Bereich von 70 bis 100 °C (die Aufheiztemperaturen der Walzen betragen 60 bis 110 °C). Das Längsstreckverhältnis wird im Bereich von 2,2:1 bis 3,8:1, bevorzugt im Bereich von 2,3:1 bis 3,6:1 und besonders bevorzugt im Bereich von 2,4:1 bis 3,4:1 durchgeführt. Wird die Folie unterhalb von 2,2:1 verstreckt, so ist z.B. das Dickenprofil schlecht, wird die Folie oberhalb von 3,8:1 verstreckt, so ist die Thermoformbarkeit nicht mehr ausreichend.

Nach der Längsstreckung erfolgt die Querstreckung in einem entsprechenden Kluppenrahmen. Die Temperaturen der Aufheizfelder im Kluppenrahmen betragen 70 bis 120 °C (Film Temperatur: 60 bis 110 °C). Die Streckung in Querrichtung wird in einem Temperaturbereich der Folie von 90 °C (Beginn der Streckung) bis 140 °C (Ende der Streckung) durchgeführt. Das Querstreckverhältnis liegt erfindungsgemäß im Bereich von 2,2:1 bis 3,8:1, bevorzugt von 2,4:1 bis 3,7:1 und besonders bevorzugt im Bereich von 2,6:1 bis 3,6:1. Wird die Folie unterhalb von 2,2:1 verstreckt, so ist z.B. das Dickenprofil schlecht, wird die Folie oberhalb von 3,8:1 verstreckt, so ist die Thermoformbarkeit nicht mehr ausreichend.

Nach der biaxialen Orientierung erfolgt die Thermofixierung der Folie. Überraschender Weise wurde gefunden, dass zur Erzielung der vorgenannten, gewünschten guten Thermoformbarkeit der Folie die Thermofixierung unter bestimmten, erfindungsgemäßen, Bedingungen durchgeführt werden muss. Die Zeitdauer für die Thermofixierung beträgt erfindungsgemäß 5 bis 25 s, bevorzugt 6 bis 22 s und besonders bevorzugt 7 bis 20 s. Die Temperatur, bei der die Thermofixierung durchgeführt wird, liegt erfindungsgemäß im Bereich von 175 bis 220 °C, bevorzugt im Bereich von 178 bis 215 °C und besonders bevorzugt im Bereich von 180 bis 210 °C.

Nach der Thermofixierung wird die Folie abgekühlt und in üblicher Weise aufgewickelt.

Für die Herstellung der erfindungsgemäßen Folie ist es wichtig, dass die oben genannten Verfahrensbedingungen eingehalten werden. Werden die genannten erfindungsgemäßen Verfahrensbedingungen bei der Längs- und Querstreckung, sowie bei der Fixierung der Folie nicht eingehalten, so können die erfindungsgemäßen Eigenschaften der Folie hinsichtlich Mechanik der Folie, insbesondere aber hinsichtlich der gewünschten Thermoformbarkeit und Durchstoßfestigkeit nicht realisiert werden, was unerwünscht ist.

Zur Verbesserung der Wickelbarkeit der transparenten, niedrig gefüllten Folie wird in einer bevorzugten Ausführungsform zumindest eine Oberfläche der Folie inline oder offline mit einer weiteren Schicht (C) beschichtet, die Poly(acryl-), und/oder Poly(methacrylsäurealkylester) und/oder Poiy(acryl-co-methacrylsäurealkylester) enthält. Weiterhin können acrylische und/oder methacrylische Copolyester enthalten sein, die eine Vernetzung der Polymere bewirken. Dabei wird bevorzugt N-Methylolacrylamid zur Herstellung der Copolymere eingesetzt, das die vernetzende Einheit darstellt. Weiterhin können auch andere Vernetzer wie z.B. Melamin eingesetzt werden. Bevorzugt wird die Beschichtung inline aufgetragen.

Die Beschichtung (C) gemäß der vorliegenden Erfindung ist ausführlich in der EPA 0 144 948 beschrieben, auf die an dieser Stelle ausdrücklich Bezug genommen wird.

Die bevorzugte Acrylat-Beschichtung wird zumindest einseitig auf die Folie aufgebracht und dient im Wesentlichen zur Verbesserung der Wickelung, insbesondere zur Verbesserung der Abwickelung der Folie nach Lagerung (bei erhöhten Temperaturen). Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, weiterhin ein Tensid einzuarbeiten, um die Fähigkeit der wässrigen Beschichtung zur Benetzung der Trägerfolie aus Polyester weiter zu erhöhen und um die Partikel aus Copolymere aus Acryl-/methacrylsäure zu stabilisieren.

Die Beschichtung der Folie mit der acrylisch vernetzenden Schicht (C) erfolgt entweder inline vorzugsweise zwischen dem ersten und dem zweiten Streckschritt oder offline nach der Herstellung der biaxial orientierten Folie.

Die Polyesterfolie wird mit einer funktionalen Beschichtung derart beschichtet, dass die Beschichtung auf der fertigen Polyesterfolie eine Dicke von bevorzugt 5 bis 100 nm, besonders bevorzugt 10 bis 90 und ganz besonders bevorzugt 15 bis 80 nm aufweist. Besonders bevorzugt ist die Aufbringung der Schicht (C) mittels des "Reverse gravure-roll coating" Verfahrens, bei dem sich die Beschichtung äußerst homogen in Schichtdicken bis zu 200 nm auftragen lassen. Die Beschichtung wird bevorzugt als Lösung, Suspension oder als Dispersion aufgetragen, besonders bevorzugt als wässrige Lösung, Suspension oder Dispersion.

Die genannten Stoffe werden als verdünnte, wässrige Lösung oder Dispersion auf eine der beiden Folienoberflächen aufgebracht und anschließend wird das Lösungsmittel verflüchtigt. Wird die Beschichtung Inline vor der Querstreckung aufgebracht, reicht die Temperaturbehandlung in der Querstreckung und der anschließenden Hitzefixierung aus, um das Lösungsmittel zu verflüchtigen und die Beschichtung zu trocknen.

Die erfindungsgemäße Folie, hergestellt nach oben beschriebenem erfindungsgemäßen Verfahren, besitzt eine Reihe von Eigenschaften, von denen untenstehend die wichtigsten aufgeführt sind.

Die erfindungsgemäße Folie zeichnet sich durch sehr gute mechanische Eigenschaften aus (z.B. Flächen-E-Modul, Summe der Festigkeiten), die es u.a. ermöglichen, dass die gewünschte gute Thermoformbarkeit und die gewünschte gute Durchstoßfestigkeit erreicht werden.

Die erfindungsgemäße Folie zeichnet sich durch brillante optische Eigenschaften aus. Die Trübung der Folie ist kleiner als 2,0 %, bevorzugt kleiner als 1,5 % und besonders bevorzugt kleiner als 1,0 %. Die Clarity ist größer als 85 % bevorzugt größer als 90 % und besonders bevorzugt größer als 95 %. Der Glanz beträgt mehr als 120 bevorzugt mehr als 150 und besonders bevorzugt mehr als 180.

Die für die Anwendung wichtige Durchstoßfestigkeit F[N] der Folie ist überraschender Weise derart hoch, dass die daraus hergestellte tiefgezogene Packung, ohne Schaden zu nehmen, transportiert und gelagert werden kann. Die Folie weist im Definitionsbereich für die Dicke eine Durchstoßfestigkeit F auf, die mit der Dicke d der Folie gemäß folgender Formel korreliert

$$\frac{F[N]}{d[\mu m]} > 0{,}35$$

Bevorzugt ist F/d größer als 0,37 und besonders bevorzugt ist F/d größer als 0,38.

Die Folie weist eine Thermoformbarkeit auf, die mindestens 70 mm beträgt, bei einem Thermoformverhältnis von mindestens 2,5. Bevorzugt ist die Thermoformbarkeit größer als 73 mm und besonders bevorzugt größer als 76 mm. Bevorzugt ist das Thermoformverhältnis größer als 2,6 und besonders bevorzugt größer als 2,7.

Die Folie weist die geforderten guten Barriereeigenschaften auf, insbesondere gegen Sauerstoff und Wasserdampf.

Die hochtransparente Folie lässt sich gut wickeln und gut verarbeiten. Beim Wickeln der Folien haften die einzelnen Folienlagen nicht aneinander, auch nicht bei erhöhter Temperatur, wie 50 oder 60 °C.

Die erfindungsgemäße thermoformfähige Polyesterfolie eignet sich hervorragend zum Verpacken von Nahrungs- und Genussmitteln. Sie ist insbesondere zur Verpackung von Nahrungs- und Genussmitteln in tiefen thermogeformten Menüschalen geeignet, die gemäß den Verfahren nach dem Stand der Technik hergestellt wurden.

Die Tabelle 1 fasst u.a. die wichtigsten erfindungsgemäßen Folieneigenschaften zusammen.

*Tabelle 1 - erfindungsgemäße Bereiche*

| Folie | | Erfind u ngsmäßiger Bereich | Bevorzugt | Besonders bevorzugt | Einheit | Messmethode |
|---|---|---|---|---|---|---|
| Anteil Copolyester in Folie | | $\geq 85$ | $\geq 86$ | $\geq 87$ | Gew.-% | |
| Anteil Einheiten im Copolyester, aufgebaut auf Isophthalateinhelten | | 6 bis 15 | 7 bis 14 | 8 bis 13 | Mol-% | |
| Fü llstoffkonzentration | | 0 bis 0,1 | $1,0 \times 10^{-5}$ bis 0,075 | $1,1 \times 10^{-5}$ bis 0,05 | Gew.-% | |
| Partlkeldurchmesser $d_{50}$ | | 1,5 bis 5 | 1,7 bis 4,5 | 2,0 bis 4,0 | $\mu$m | |
| Verfahrenstechnik | | | | | | |
| Längsstreekung (T-Prozess) | Aufheiztemperatur der Walzen | 60 bis 110 | 65 bis 105 | | °C | |
| | Strecktemperatur der Folie | 70 bis 100 | 75 bis 100 | | °C | |
| | Längsstreckverhältnis | 2,2 bis 3,8 | 2,3 bis 3,6 | 2,4 bis 3,4 | | |
| Querstreckung | Temperatur Aufhelrfelder | 70 bis 120 | | | °C | |
| | Aufheiztemperatur der Folie | 60-110 | | | °C | |
| | Strecktemperatur | 90-140 | | | °C | |
| | Querstreckverhältnis | 2,2 bis 3,8 | 2,4 bis 3,7 | 2,6 bis 3,6 | | |
| Fixlerung | Temperatur | 175 bis 220 | 178 bis 215 | 180 bis 210 | °C | |
| | Dauer | 5 bis 25 | 6 bis 22 | 7 bis 20 | sec | |
| Eigenschaften der Folie | | | | | | |
| Flächen E-Modul | | 4500 bis 6300 | 4600 bis 6200 | 4700 bis 6100 | N/mm$^2$ | ISO 527-1 und ISO 527-3; Mustertyp 2 |
| Summe der $\sigma$S-Werte | | 170 bis 220 | 175 bis 215 | 180 bis 210 | N/mm$^2$ | ISO S27-1 und ISO S27-3; Mustertyp 2 |
| Dichte | | < 1390 | < 1389 | < 1387 | kg/m$^3$ | ASTM D 1SOS-68, Methode C |

(fortgesetzt)

| Eigenschaften der Folie | | | | | | |
|---|---|---|---|---|---|---|
| Trübung der Folie | | | < 2,0 | <1.5 | < 1,0 | % | ASTM D 1003-61, Methode A |
| Clarity der Folie | | | ≥85 | ≥ 90 | ≥ 95 | % | ASTM D 1003 |
| Glanz der Folie | | | ≥ 120 | ≥ 150 | ≥ 180 | N/15 mm | DIN 67530 |
| SV-Wert der Folie | | | 680 bis 1000 | 710 bis 950 | 740 bis 900 | | |
| Du rchstoßfestigkeit / Dicke der Folie | | | > 0,35 | > 0,37 | > 0,38 | N/$\mu$m | EN 14447 |
| Tiefzlehfählgkeit | Tiefe | | ≥ 70 | ≥ 73 | ≥ 76 | mm | |
| | $A_{Schale}/A_{Colin}$ | | ≥ 2.5 | ≥ 2.6 | ≥ 2,7 | | |
| Dicke der Folie | | | 50 bis 300 51 bis 300 | | 52 bis 300 | $\mu$m | |

**Messmethoden**

Zur Charakterisierung der Rohstoffe und der Folien wurden die folgenden Messmethoden benutzt:

**E-Modul**

Der E-Modul wird gemäß DIN EN ISO 527-1 und -3 (Probekörper Typ 2) an 100 mm x 15 mm großen Folienstreifen bestimmt. Der Flächen E-Modul wird gemäß folgender Formel berechnet

$$E_{Fläche} = \sqrt{(E_{MD}{}^2 + E_{TD}{}^2)}$$

**$\sigma_5$-Wert**

Der $\sigma_5$-Wert wird gemäß DIN EN ISO 527-1 und -3 (Probekörper Typ 2) an 100 mm $\times$ 15 mm großen Folienstreifen bestimmt.

**Dichte**

Die Dichte der Folie wird nach ASTM-D 1505-68, Methode C, bestimmt.

**Trübung und Clarity**

Die Messung an den Polyesterfolien erfolgt am Hazegard Hazemeter XL-211 der Fa. BYK-Gardner GmbH Deutschland. Die Trübung wurde nach ASTM-D 1003-61, Methode A, bestimmt. Die Messung der Clarity geschieht nach ASTM-D 1003 mittels Hazeguard, jedoch jetzt am "clarity port" des Messgerätes. Die Messungen werden sämtlich direkt nach Herstellung an der Folie durchgeführt.

**Glanz 20°**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird ein Einstrahlwinkel von 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**Standardviskosität SV**

Die Standardviskosität in verdünnter Lösung SV wurde, angelehnt an DIN 53 728 Teil 3, in einem Ubbelohde Viskosimeter bei $(25 \pm 0{,}05)\,°C$ gemessen. Dichloressigsäure (DCE) wurde als Lösemittel verwendet, Die Konzentration des gelösten Polymers betrug 1 g Polymer / 100 mL reines Lösemittels. Die Auflösung des Polymers erfolgte 1 Stunde bei 60 °C. Wurden die Proben nach dieser Zeit nicht vollständig gelöst, wurden noch bis zwei Auflösungsversuche jeweils 40 min bei 80 °C durchgeführt und die Lösungen anschließend 1 Stunde bei einer Drehzahl von 4100 $min^{-1}$ zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$Einwaage = \frac{(Einwaage\ entsprechend\ 100\ \%\ Polymer)}{[(100-Partikelgehalt\ in\ Gew.\text{-}\%) \cdot 0{,}01]}$$

**Mittlerer Partikeldurchmessers $d_{50}$**

Die Bestimmung der durchschnittlichen Partikelgröße $d_{50}$ wurde mit Hilfe eines Malvern Master Sizer 2000 durchgeführt. Dazu wurden die einzusetzenden Partikel in Wasser dispergiert und in eine Küvette überführt, die im Messgerät analysiert wurde, wobei die Größenbestimmung mittels Laserbeugung erfolgte. Im Allgemeinen, nimmt dabei der Detektor ein Intensitätsbild des gebeugten Laserlichts auf, aus dessen winkelabhängiger Lichtintensität mithilfe einer mathematischen Korrelationsfunktion die Partikelgrößenverteilung berechnet wird. Die Partikelgrößenverteilung ist durch zwei Parameter gekennzeichnet, dem Medianwert d50 (= Lagemaß für den Mittelwert) und dem Streumaß SPAN98 (= Maß für die Streuung des Partikeldurchmessers). Der Messvorgang erfolgte automatisch und beinhaltete auch die mathematische Bestimmung des d50-Wertes.

Messungen an der mittels dieser Partikel hergestellten Folie ergeben einen um 15 - 25 % niedrigeren $d_{50}$ Wert als die eingesetzten Partikel.

**Durchstoßfestigkeit** ($\approx$ Durchstichversuch)

Die Durchstoßfestigkeit ($\approx$ Durchstichversuch) wird nach EN 14477 gemessen. Im Verpackungsbereich ist die Beanspruchung mit harten, spitzen oder kantigen Gegenständen eine wichtige Größe. Die Kenntnis der Durchstoßfestigkeit ist dann interessant, wenn die Folien als Verpackungsmaterial z. B. für Lebensmittel oder für scharfkantige Teile verwendet werden. Mit dem Durchstichversuch nach EN 14477 wird dieses Verhalten gegenüber einer Spitze mit 0,8 mm Durchmesser gemessen. Dieser Versuch ist auch als Parken Pen Test / Parker Kugelschreiber Prüfung bekannt.

**Bestimmung der Thermoformeigenschaften**

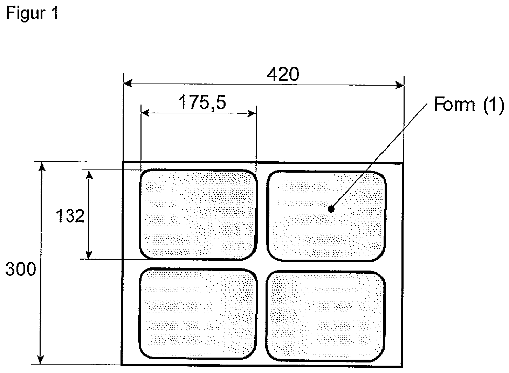

Zur Bestimmung der Thermoformeigenschaften der Folie wurde diese auf einer Multivac Maschine (z.B. R245 / SN:166619) unter den Formbedingungen (Formtemperaturen 210 °C, Zeit Anheizen: 2 - 3 s, Explosionsverformung / Druckluftspeicher 2 bar, Formdruck 2 bar getestet, Formen: 2 s) tiefgezogen. Die eingestellten Formate für die herzustellenden Schalen sind der Figur 1 zu entnehmen. Die beiden Eigenschaften, die die Tiefziehbarkeit der erfindungsgemäßen Folie kennzeichnen sind

• Der maximale Tiefzug in mm der erfindungsgemäßen Folie (= Tiefe der Schale) und das

• Tiefzugverhältnis von $A_{schale}/A_{Folie}$ ($A_{Schale}$ = Oberfläche der tiefgezogenen Schale, $A_{Folie}$ = Oberfläche der eingesetzten, erfindungsgemäßen Folie)

**Bestimmung der Barriereeigenschaften**

Die Wasserdampfdurchlässigkeit (WVTR) wurde an unterschiedlich dicken Folien bei 23 °C und 85 % r. F. nach ISO 15106-3 gemessen. Die Messung der Sauerstoffbarriere (OTR) erfolgte mit einem OXTRAN® 100 von Mocon Modern Controls (USA) nach ISO 15105-2, Annex A, 23,0 °C / 50 % r.F. Die Messung der OTR erfolgte dabei ebenfalls an unterschiedlich dicken Folien.

Im Folgenden wird die Erfindung anhand von Beispielen näher erläutert.

**Beispiel 1**

Es wurde nach dem erfindungsgemäßen Verfahren eine biaxial orientierte Folie aus einem Ethylenterephthalat-Ethylenisophthalat-Copolymeren hergestellt. Die Dicke der Folie betrug 96 $\mu$m. Dazu wurden Chips aus dem Copolymeren dem Extruder für die Herstellung der Folie zugeführt. Entsprechend den in untenstehender Tabelle aufgeführten Verfahrensbedingungen wurde das Copolymere im Extruder aufgeschmolzen und homogenisiert.

Nach Filtration wurde in einer Breitschlitzdüse die Schmelze ausgeformt und über die Düsenlippe ausgestoßen. Der Schmelzfilm wurde abgekühlt und über eine stufenweise Orientierung in Längs- und Querrichtung mit anschließender Fixierung, eine transparente, einschichtige Folie hergestellt.

Zur Erzielung einer guten Wickelung der Folie wurde zwischen der Längs- und der Querstreckung die Folie mittels Reversgravurverfahren aus einer wässrigen Dispersion heraus beschichtet. Die im Kluppenrahmen acrylisch vernetzte Beschichtung (C) enthält eine 4,5 Gew.-%ige Dispersion eines Latex, bestehend aus einem Copolymeren aus 60 Gew.-% Methylmethacrylat, 35 Gew.-% Ethylacrylat und 5 Gew.-% N-Methylolacryiamid und einem Tensid. Das Trockengewicht der Beschichtung (bezogen auf die biaxial orientierte Folie) betrug ca. 0,035 g/m$^2$.

Das Copolymere für die erfindungsgemäße Folie ist wie folgt zusammengesetzt

89 Mol-% Ethylenterephthalat-Einheiten
11 Mol-% Ethylenisophthalat-Einheiten

Die Herstellungsbedingungen in den einzelnen Verfahrensschritten waren

| Extrusion | Temperaturen für die Schmelze | 270 | °C |
|---|---|---|---|
| | Temperatur der Abzugswalze | 20 | °C |
| Längsstreckung | Aufheiztemperatur der Walzen | 70-90 | °C |
| | Strecktemperatur | 86 | °C |
| | Längsstreckverhältnis | 3,0 | |
| Querstreckung | Temperatur der Aufheizfelder | 118 | °C |
| | Strecktemperatur | 135 | °C |
| | Querstreckverhältnis | 3,4 | |
| Fixierung | Temperatur | 185 | °C |
| | Dauer | 9 | s |

In Tabelle 3 sind die Zusammensetzung der Folie, sowie weitere Informationen zur erfindungsgemäßen Folie, insbesondere zu den Eigenschaften der erfindungsgemäßen Folie, dargestellt.

**Beispiel 2**

Gegenüber Beispiel 1 wurde nur der Herstellprozess für die Folie modifiziert. Die Konvergenz in der Fixierung betrug jetzt 1,75 %, im Beispiel 1 betrug sie 0 %. Das Gesamtresultat war ähnlich, die Durchstoßfestigkeit der Folie war leicht erhöht.

**Beispiel 3**

Gegenüber Beispiel 1 wurde lediglich die Zusammensetzung für die Rohstoffmischung, die dem Extruder zugeführt wird, geändert. Die Rohstoffmischung enthält jetzt zusätzlich 1500 ppm eines Radikalfängers (= Irganox 1010), der in Form eines Masterbatches auf Basis von Polyethylenterephthalat zu dosiert wurde. Die neue Rohstoffmischung ist der folgenden Tabelle zu entnehmen. Die Rohstoffmischung enthält aktuell noch 10,18 Mol-% Ethylenisophthalat-Einheiten.

| Folie | | Einheit |
|---|---|---|
| Anteil Copolyester mit einem IPA-Anteil von 11 Mol-% in Rohstoffmischung | 92,5 | Gew.--% |
| Anteil PET-Masterbatch mit 2 % Radikalfänger (Irganox 1010) in Rohstoffmischung | 7,5 | Gew.--% |
| Anteil in Rohstoffmischung, aufgebaut auf Isophthalateinheiten | 10,18 | Mol--% |
| Anteil an Radikalfänger in Rohstoffmischung | 1500 | ppm |

In Tabelle 3 sind wiederum die Eigenschaften der erfindungsgemäßen Folie dargestellt.
Die Folie nach Beispiel 3 dieser Anmeldung als tiefziehfähige Unterfolie und Hostaphan® RPSM 40 AFI als siegel- und peelfähige Polyester-Oberfolie wurden jeweils für sich in eine Multivac-Maschine (R 245/SN:166619) eingespannt. Die Unterfolie wurde unter den Formbedingungen (Formtemperaturen 210 °C, Zeit Anheizen: 2 - 3 s, Explosionsverformung / Druckluftspeicher 2 bar, Formdruck 2 bar getestet, Formen: 2 s) tiefgezogen. Die eingestellten Formate für die herzustellenden Schalen sind der Figur 1 zu entnehmen. Der Tiefzug der Unterfolie betrug 70 mm, das Tiefzugverhältnis 2,6.
Eine Portion Schweinefleisch wurde in den Hohlraum gelegt und die Oberfolie so auf die Oberseite der Unterfolie gebracht, dass die heißsiegelbare Oberfläche der Oberfolie in Kontakt mit der Unterfolie war. Die Heißversiegelung wurde auf der gleichen Maschine bei einer Temperatur von 160 °C, 2 s bei einem Druck von 2 bar durchgeführt.
Die Portion Fleisch hatte ein Gewicht von etwa 1000 g. Die Packung wurde in einen herkömmlichen Heimofen gegeben und bei 220 °C für 70 Minuten gegart.

Nach Beendigung des Garzyklus wurde die Oberfolie von der Unterfolie der Verpackung manuell abgezogen, und die Folie nach der vorlirgenden Erfindung hinsicht Sprödigkeit untersucht. Es konnte keine Sprödigkeit (kein Splittern) der Folie, auch nicht an den Ecken, festgestellt werden.

**Vergleichsbeispiel 1**

Im Vergleich zu Beispiel 1 wurde in der Folie der Anteil von Isophthalat auf 5,0 Mol.-% herabgesetzt; sonst alles gleichgelassen. In Tabelle 3 sind die Eigenschaften der Folie dargestellt.

**Vergleichsbeispiel 2**

Es wurde das Beispiel 1 aus der EP 1 697 129 B1 nachgearbeitet. In Tabelle 3 sind die Eigenschaften der Folie dargestellt. Das Laminat ist für die eingangs genannten Anwendungen geeignet, es ist aber verbesserungswürdig in der Thermoformbarkeit, der Durchstoßfestigkeit, vor allem aber verbesserungswürdig in der Optik (Trübung).

**Vergleichsbeispiel 3**

Es wurde das Beispiel 1 aus der EP 1 945 512 B1 nachgearbeitet. Das Verfahren ist für die eingangs genannten Anwendungen geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Trübung).

**Vergleichsbeispiel 4**

Es wurde das Beispiel 3 aus der EP 2810776 A1 nachgearbeitet. In Tabelle 3 sind die Eigenschaften der Folie dargestellt. Die Folie ist für die eingangs genannten Anwendungen, z.B. zur Herstellung tiefziehfähiger Folienbeutel mit geringem Tiefziehverhältnis, geeignet. Auch ist die Folie für das Cook-in-Verfahren geeignet; aufgrund der gewählten Verfahrensbedingungen in den Streckaggregaten ist sie aber verbesserungswürdig in der Thermoformbarkeit und in der Durchstoßfestigkeit. Vor allem aber ist die Folie aus der EP 2810776 A1, Beispiel 3, verbesserungswürdig in der Optik (Trübung).

## Tabelle 3 – Folienzusammensetzungen und -eigenschaften

| | | Zusammensetzung Rohstoffmischung für Folie | | | | E-Modul der Folie | | Flächen E-Modul | σ5-Wert der Folie | | Summe der σ5-Werte | Dichte | Trübung der Folie | Clarity der Folie | Glanz der Folie | | SV-Wert der Folie | Durchstoßfestigkeit | Tiefziehfähigkeit | | Barriereeigenschaften der Folie | | Wickelverhalten | Garen von Schweinefleisch bei 220 °C und 70 min |
|---|---|---|---|---|---|---|---|---|---|---|---|---|---|---|---|---|---|---|---|---|---|---|---|---|
| | | TS | IS | EG | Irganox 1010 | längs | quer | | längs | quer | | | | | A-Seite | B-Seite | | | Tiefe | $A_{Sshale}/A_{Folie}$ | OTR | WVTR | | |
| | | Mol-% | | | ppm | N/mm² | | | | | | kg/dm³ | % | % | | | | N/µm | mm | | cm³/(m² x bar x d) | g/(m² x d) | | |
| Beispiele | 1 | 89 | 11 | 100 | | 3682 | 4117 | 5523 | 94 | 100 | 194 | 1,385 | 0,4 | 100 | 205 | 205 | 777 | 0,395 | 70 | 2,86 | 16 | 1,89 | sehr gut | |
| | 2 | 89 | 11 | 100 | | 3843 | 4294 | 5763 | 94 | 103 | 197 | 1,385 | 0,4 | 100 | 204 | 203 | 777 | 0,398 | 70 | 2,86 | 16 | 1,89 | sehr gut | |
| | 3 | 89,825 | 10,175 | 100 | 1500 | 3874 | 4479 | 5922 | 98 | 99 | 197 | 1,386 | 0,3 | 100 | 202 | 202 | 801 | 0,391 | 70 | 2,86 | 16 | 1,88 | sehr gut | Packung nicht spröde |
| V-Beispiele | 1 | 95 | 5 | 100 | | 4210 | 4769 | 6361 | 103 | 100 | 203 | 1,392 | 0,4 | 100 | 215 | 214 | 787 | 0,36 | 55 | 2,00 | | | sehr gut | |
| | 2 | 76,2µm PA+ 25,4µm APET | | | | | | | | | | | 17 | 75 | 74 | 76 | | | 65 | 2,00 | | | | |
| | 3 | 50 µm Polyester | | | | 4175 | 4175 | 5904 | | | | | 5 | | 120 | 120 | | | 50 | 2,00 | | | | |
| | 4 | 91 | 9 | 100 | 1000 | | | | | | | | 5,3 | | | | 783 | | 55 | 2,00 | | | | Packung nicht spröde |

**Patentansprüche**

1. Transparente, biaxial orientierte, thermoformbare Polyesterfolie, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Folie

   a) einen Flächen-E-Modul im Bereich von 4500 bis 6400 N/mm², bestimmt gemäß Formel (I)

$$E_{Fläche} = \sqrt{\left(E_{MD}{}^2 + E_{TD}{}^2\right)} \ \text{(I)},$$

   wobei

   $E_{MD}$ der E-Modul der Folie, gemessen in Längsrichtung der Maschine ist und
   $E_{TD}$ der E-Modul der Folie, gemessen in Querrichtung der Maschine ist

   b) eine Summe der Festigkeiten ($\sigma_5$-Wert) in Längsrichtung und in Querrichtung im Bereich von 170 bis 220 MPa, bestimmt gemäß DIN EN ISO 527-1 und -3,
   c) eine Dichte von kleiner 1390 kg/m³
   d) eine Trübung von weniger als 2,0 %, bestimmt gemäß ASTM-D 1003-61, Methode A, eine Clarity von mindestens 85 %, bestimmt gemäß ASTM-D 1003 und einen Glanz von mindestens 120, bestimmt gemäß DIN 67530,
   e) eine Dicke im Bereich von 50 bis 300 μm

   aufweist.

2. Transparente, biaxial orientierte, thermoformbare Polyesterfolie nach Anspruch 1, wobei die Folie einen Flächen-E-Modul im Bereich von 4500 bis 6300 N/mm² aufweist.

3. Transparente Polyesterfolie nach Anspruch 1 oder 2, wobei die Polyesterfolie einen oder mehrere Radikalfänger enthält,

4. Transparente Polyesterfolie nach Anspruch 3, wobei der/die Radikalfänger aus der Gruppe der phenolischen Antioxidantien ausgewählt ist/sind, bevorzugt aus der Gruppe bestehend aus pentaerythritol tetrakis [3-(3,5-di-tert-butyl-4-hydroxyphenyl)-propionate] und 1,3,5-Trimethyl-2,4,6-tris(3,5-di-tert-butyl-4-hydroxybenzyl)-benzol.

5. Transparente Polyesterfolie nach einem oder mehreren der Ansprüche 1 bis 4, wobei die Polyesterfolie antimonfrei ist.

6. Verfahren zur Herstellung der Folie nach einem oder mehreren der Ansprüche 1 bis 5 durch Extrusion der Polymerschmelzen der Schicht(en), biaxiale Streckung der Folie in Längsrichtung bei einer Temperatur zwischen 70 ° und 100 °C mit einem Längsstreckverhältnis von 2,2:1 bis 3,8:1, und in Querrichtung bei einer Temperatur zwischen 90 ° und 140 °C mit einem Querstreckverhältnis von 2,2:1 bis 3,8:1, sowie Thermofixierung für 5 bis 25 s bei 175 ° bis 220 °C und Aufwickelung der gestreckten Folie.

7. Verwendung der Folie nach einem oder mehreren der Ansprüche 1 bis 5 als Inmold-Dekorationsfolie, für die Verpackung von Lebensmittel, als Blister, für Hartschalenkoffer, oder für die Möbel- oder die Metalllaminierung (can liner).

**Claims**

1. Transparent, biaxially oriented, thermoformable polyester film comprising at least 85 % by weight of a copolyester whose dicarboxylic acid components derive to an extent of 85 to 94 mol % from terephthalic acid-based units and to an extent of 6 to 15 mol % from isophthalic acid-based units, where the film has

   a) a surface elasticity modulus in the range from 4500 to 6400 N/mm², determined in accordance with formula (I)

$$E_{surface} = \sqrt{(E_{MD}^{2} + E_{TD}^{2})} \ (\mathrm{I}),$$

where

$E_{MD}$ is the elasticity modulus of the film as measured in the longitudinal direction of the machine, and
$E_{TD}$ is the elasticity modulus of the film as measured in the transverse direction of the machine,

b) a sum total of the strengths ($\sigma_5$) in the longitudinal direction and in the transverse direction in the range from 170 to 220 MPa, determined according to DIN EN ISO 527-1 and - 3,
c) a density of less than 1390 kg/m$^3$,
d) a haze of less than 2.0 %, determined according to ASTM-D 1003-61, Method A, a clarity of at least 85 %, determined according to ASTM-D 1003, and a gloss of at least 120, determined according to DIN 67530,
e) a thickness in the range from 50 to 300 $\mu$m.

2. Transparent, biaxially oriented, thermoformable polyester film according to Claim 1, wherein the film has a surface elasticity modulus in the range from 4500 to 6300 N/mm$^2$.

3. Transparent polyester film according to Claim 1 or 2, wherein the polyester film comprises one or more radical scavengers.

4. Transparent polyester film according to Claim 3, wherein the radical scavenger/scavengers is/are selected from the group of phenolic antioxidants, preferably from the group consisting of pentaerythritol tetrakis[3-(3,5-di-tert butyl-4-hydroxyphenyl)propionate] and 1,3,5-trimethyl-2,4,6-tris(3,5-di-tert-butyl-4-hydroxybenzyl)benzene.

5. Transparent polyester film according to one or more of Claims 1 to 4, wherein the polyester film is antimony-free.

6. Process for producing the film according to one or more of Claims 1 to 5 by extrusion of the polymer melts of the layer(s), biaxial stretching of the film in the longitudinal direction at a temperature between 70 ° and 100 °C with a longitudinal stretching ratio of 2.2:1 to 3.8:1, and in transverse direction at a temperature between 90 ° and 140 °C with a transverse stretching ratio of 2.2:1 to 3.8:1, and also heat setting for 5 to 25 s at 175 ° to 220 °C and winding of the stretched film.

7. Use of the film according to one or more of Claims 1 to 5 as in-mould decoration film, for the packaging of food, as blister, for hard-shell cases, or for furniture lamination or metal lamination (can liner).

**Revendications**

1. Feuille de polyester transparente, thermoformable, orientée biaxialement, qui comprend au moins 85 % en poids d'un copolyester dont des composants acide dicarboxylique sont des motifs dérivés de 85 à 94 % en mole d'acide téréphtalique et des motifs dérivés de 6 à 15 % en mole d'acide isophtalique, dans laquelle la feuille présente

a) un module d'élasticité de surface dans la plage de 4 500 à 6 400 N/mm$^2$, déterminé selon la formule (I)

$$E_{surface} = \sqrt{(E_{MD}^{2} + E_{TD}^{2})} \ (\mathrm{I}),$$

dans laquelle

$E_{MD}$ est le module d'élasticité de la feuille, mesuré dans la direction longitudinale de la machine et
$E_{TD}$ est le module d'élasticité de la feuille, mesuré dans la direction transversale de la machine

b) une somme des résistances (valeur $\sigma_5$) en direction longitudinale et en direction transversale dans la plage de 170 à 220 MPa, déterminée selon la norme DIN EN ISO 527-1 et -3,
c) une densité inférieure à 1 390 kg/m$^3$

d) une turbidité inférieure à 2,0 %, déterminée selon la norme ASTM-D 1003-61, méthode A, une limpidité d'au moins 85 %, déterminée selon la norme ASTM-D 1003 et un brillant d'au moins 120, déterminé selon la norme DIN 67530,

e) une épaisseur dans la plage de 50 à 300 $\mu$m.

**2.** Feuille de polyester transparente, thermoformable, orientée biaxialement selon la revendication 1, dans laquelle la feuille présente un module d'élasticité de surface dans la plage de 4 500 à 6 300 N/mm$^2$.

**3.** Feuille de polyester transparente selon la revendication 1 ou 2, dans laquelle la feuille de polyester contient un ou plusieurs piégeurs de radicaux.

**4.** Feuille de polyester transparente selon la revendication 3, dans laquelle le/les piégeur(s) de radicaux est/sont choisi(s) dans le groupe des antioxydants phénoliques, de préférence dans le groupe consistant en penta-érythritol-tétrakis[3-(3,5-di-tert-butyl-4-hydroxyphényl)-propionate] et 1,3,5-triméthyl-2,4(6-tris(3,5-di-tert-butyl-4-hydroxybenzyl)-benzène.

**5.** Feuille de polyester transparente selon l'une ou plusieurs des revendications 1 à 4, dans laquelle la feuille de polyester est dépourvue d'antimoine.

**6.** Procédé de fabrication de la feuille selon l'une ou plusieurs des revendications 1 à 5 par extrusion des masses fondues de polymère de la/des couche(s), étirement biaxial de la feuille en direction longitudinale à une température entre 70 et 100 °C avec un rapport d'étirement longitudinal de 2,2:1 à 3,8:1, et en direction transversale à une température entre 90 et 140 °C avec un rapport d'étirement transversal de 2,2:1 à 3,8:1, ainsi qu'une thermofixation pendant 5 à 25 s de 175 à 220 °C et enroulement de la feuille étirée.

**7.** Utilisation de la feuille selon l'une ou plusieurs des revendications 1 à 5 comme feuille de décoration dans le moule, pour l'emballage de denrées alimentaires, comme blister, pour des valises rigides, ou pour la stratification de meubles ou de métal (can liner).

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5217563 A
- EP 2810776 A1
- EP 2810776 A
- EP 1697129 B1
- EP 1945512 B1
- EP 0415383 A
- EP 1697129 A